# EUROPEAN PATENT SPECIFICATION

(11) **EP 0 738 474 B1**
(45) Date of publication and mention of the grant of the patent: **26.06.2002**
(21) Application number: 96200983.3
(22) Date of filing: 09.04.1996
(51) Int. Cl.: A23L 1/16, A23L 1/0522

(54) **Process for making noodles based on raw mung bean starch or potato starch**
Verfahren zur Herstellung von Nudel auf Basis von Mungbohnen- oder Kartoffelstärke
Préparation de nouilles à base d'amidon de fèves de mung ou d'amidon de pomme de terre

(30) Priority: 22.04.1995 SG 9500310
(43) Date of publication of application: 23.10.1996
(73) Proprietor: SOCIETE DES PRODUITS NESTLE S.A., 1800 Vevey (CH)
(72) Inventor: Lian, Hwee Peng Rebecca, Singapore 1953 (SG); Toh, Tian Seng, Singapore 2776 (SG)
(74) Representative: Pate, Frederick George

(56) References cited:
- GB-A- 1 128 257
- US-A- 4 960 604
- C.MERCIER: "Pasta and Extrusion Cooked Foods" 1986 , ELSEVIER , GB XP002029790 Pages 55-59 * page 55, line 3 - page 57, paragraph 1 *
- JOURNAL OF FOOD SCIENCE, vol. 59, no. 2, 1994, CHICAGO US, page 378-381, 386 XP002029788 F.C.F. GALVEZ: "Process Variables, Gelatinized Starch and Moisture Effects on Physical Properties of Mungbean Noodles"
- PATENT ABSTRACTS OF JAPAN vol. 005, no. 041 (C-047), 18 March 1981 & JP 55 165774 A (TAKAHASHI EIJI), 24 December 1980,
- DATABASE WPI Section Ch, Week 9038 Derwent Publications Ltd., London, GB; Class D13, AN 90-288202 XP002029791 & KR 8 903 737 B (YU Y S) , 4 October 1989
- JOURNAL OF FOOD SCIENCE, vol. 61, no. 1, 1996, CHICAGO US, pages 248-252, XP002029789 Y.S. KIM: "Starch Noodle Quality as Related to Potato Genotypes"

## Description

The present invention relates to a process for the preparation of noodles, more particularly to the preparation of instant glass, cellophane or transparent noodles which, for the sake of convenience, will hereinafter be referred to as instant glass noodles.

The traditional process for preparing glass noodles is from mung beans and involves a first cooking step of the dough to partially gelatinise the starch, mixing, kneading and extruding the dough, a second cooking step to complete the starch gelatinisation, followed by draining, cooling and freezing for 24-28 hours to allow starch retrogradation and finally drying.

US-A-4830867 describes and claims a process for producing a transparent pasta sheet wrapped around a filling which comprises adding water to a starting mixture comprising raw starch:α-potato starch in a weight ratio of about 95:5 to about 35:65, kneading the moistened mixture to form a dough, thereafter extending the dough to produce a transparent pasta sheet and wrapping the sheet around a filling. There is no mention of instant noodles nor a dehydrated product.

US-A-4871572 describes and claims an extruded oriental noodle, consisting essentially of a starch and water, characterized in that the starch used in the preparation of the noodle is a mixture of mung bean starch and a granular crosslinked potato starch or a granular crosslinked sweet potato starch, the granular potato starch being crosslinked sufficiently to have a sediment volume of about 2-16 ml and the sweet potato starch being crosslinked to have a sediment volume of about 2-6 ml. The only process described in this patent for preparing the oriental noodles involves freezing and thawing stages before air drying. There is no mention of instant noodles.

We have devised a process for the preparation of instant glass noodles from raw mung bean starch or raw potato starch which requires no cooking, freezing or thawing stages. Cross-linked or alpha-starches are unnecessary.

According to the present invention, there is provided a process for the preparation of an instant glass noodle which comprises
a) preparing a dough from raw mung bean starch or raw potato starch or any mixture thereof by adding hot water and mixing to partially pregelatinise the starch,
b) extruding the dough to form the noodles,
c) steaming the noodles,
d) blanching the steamed noodles with hot water,
e) chilling the blanched noodles in chilled water to allow starch retrogradation, and
f) drying the noodles to a moisture content below 15%.

Mung bean starch imparts a more crunchy noodle bite while potato starch imparts a more elastic noodle bite.

The amount of hot water added to the starch may conveniently be from 20 to 60% by weight, preferably from 30 to 50% by weight and more preferably from 35 to 45% by weight based on the total weight of the dough formed. The temperature of the hot water may be from 80°C to boiling, preferably from 85° to 100°C and especially from 90° to 98°C. The duration of the mixing of the hot water with the starch may be, for example, from 2 to 30 minutes, preferably from 5 to 20 minutes and more preferably from 10 to 15 minutes. The admixture with hot water should pregelatinise some, but not all, of the starch, e.g. from 5% to 30%, preferably from 10% to 20%. The partial pregelatinisation provides binding for good processability.

The extrusion of the dough to form the noodle may be carried out in a ram extruder or a double screw extruder but is preferably carried out in a single screw extruder. The diameter of the nozzle may be, for example, from 0.25 to 1.5 mm and preferably from 0.5 to 1.0 mm and especially from 0.7 to 0.9 mm.

Preferably, after extrusion, the noodle is portioned and formed into a nest or cake. The portioning involves cutting the noodle into strips or strands having a length of from about 7 cm up to 40 cm or more. The portioned strands may be formed into a nest by folding and intertwinning a plurality of strands into either a roughly spherical shape somewhat similar to a bird's nest or into a roughly square shape to form a cake. The weight of the nest or cake may be from 15 to 100 g, more usually from 20 to 80g, for example from 25 to 65g. The volume of the nest or cake may be from about 50cm³ to about 270cm³.

The steaming of the noodles is performed to firm up the surface and structure and may be carried out for a period of from 30 seconds to 25 minutes, preferably from 1 to 15 minutes and especially from 2 to 10 minutes. The temperature of the steam may be at least 85°C and preferably from 90 to 100°C. Saturated steam or steam at atmospheric condition may conveniently be used, if desired.

The blanching of the steamed noodles is carried out to complete or substantially complete the starch gelatinisation. The temperature of the hot water may be from 80°C to boiling, preferably from 85° to 100°C and especially from 90° to 98°C. The duration of the blanching may be from 1 to 60 seconds, preferably from 5 to 45 seconds and more preferably from 10 to 30 seconds.

The chilling of the blanched noodles is carried out to allow starch retrogradation. Retrogradation allows the noodle strands to become stiffer, to facilitate the operation of strand loosening to prevent them from sticking together before drying as well as to create a desirable rigid or rubbery texture to the final product. The chilling is performed with chilled water which may be from just above freezing point to 15°C, for instance from 1° to 12°C and preferably from 2° to 10°C. The duration of the chilling may be from 10 seconds to 5 minutes, preferably from 30 seconds to 3 minutes and more preferably from 1 to 2 minutes.

After chilling, excess water may be drained away, e.g. by sieving, vibrating or air blowing.

Finally the chilled noodles are dried to give the instant glass noodles preferably to a moisture content of 3 to 13% by weight, e.g. from 5 to 10% by weight. The drying may be carried out by any conventional method, e.g. a heated drum, an oven, an infrared tunnel, a microwave oven, a dielectric heater or more conveniently, by hot air. The drying temperature may be from 50° to 100°C, preferably from 55° to 90°C and especially from 60° to 80°C. The duration of the drying may be from 5 minutes to 5 hours, preferably from 1 to 3 hours, longer periods of time usually being required at lower temperatures.

The instant glass noodles prepared according to this invention may be reconstituted for consumption by placing in boiling water and continuing to boil for from 1 to 5 minutes, preferably from 2 to 3 minutes. They may also be reconstituted for consumption in a microwave oven by adding to an appropriate amount of water, e.g. cold tap water at 20° to 25°C and heating at high power from 3 to 6 minutes, preferably 4 to 5 minutes, or boiling water and heating at high power from 1 to 4 minutes, preferably 2-3 minutes. In addition, the instant glass noodles may be reconstituted for consumption by standing in water that has already been boiled with the heat turned off except that the time required for rehydration may be longer, e.g. 10-15 minutes.

The following Examples further illustrate the present invention.

### EXAMPLE 1

60 parts of raw mung bean starch is mixed with 40 parts of water at 95°C for 15 minutes to give a dough in which the starch is partially pregelatinised. The dough is formed into noodle shape by extruding through a single screw extruder whose die noozle diameter is 0.8 mm. The extruded noodle is then portioned into strands having a length of 30 cm and then a plurality of strands are folded and intertwined to form a nest having a weight of 50 g and a volume of 250cm³. The nest is steamed for 5 minutes with steam at a temperature of 95°C and then blanched with water at 95°C for 20 seconds to complete the starch gelatinisation.

After blanching, the nest is chilled for 1.5 minutes in water at 5°C to allow starch retrogradation. Excess water is drained off by means of a sieve and the nest is finally dried in an oven at 70°C for 2 hours to give the instant glass noodles having a moisture content of 8%.

On reconstitution for consumption by boiling in water for 2 minutes, the glass noodles have a desirable crunchy bite.

### EXAMPLE 2

A similar procedure to that described in Example 1 is followed but using, instead of the mung bean starch, raw potato starch. On reconstitution for consumption, the glass noodles have a desirable elastic bite.

### EXAMPLES 3 to 5

A similar procedure to that described in Example 1 is followed but using, instead of the mung bean starch, mixtures of raw mung bean starch and raw potato starch in the proportions shown in Table 1. On reconstitution for consumption, the organoleptic properties are as indicated in Table 1.

**TABLE 1**

| EXAMPLE | RATIO OF MUNG BEAN STARCH TO POTATO STARCH | ORGANOLEPTIC PROPERTIES |
|---|---|---|
| | | |
| 3 | 75:25 | more crunchy bite |
| 4 | 50:50 | well balanced bite |
| 5 | 25:75 | more elastic bite |

## Claims

1. A process for the preparation of an instant glass noodle which comprises
a) preparing a dough from raw mung bean starch or raw potato starch or any mixture thereof by adding hot water and mixing to partially pregelatinise the starch,
b) extruding the dough to form the noodles,
c) steaming the noodles,
d) blanching the steamed noodles with hot water,
e) chilling the blanched noodles in chilled water to allow starch retrogradation, and
f) drying the noodles to a moisture content below 15%.

2. A process according to claim 1 wherein the amount of hot water added to the starch is from 20 to 60% by weight based on the total weight of the dough formed.

3. A process according to claim 1 wherein the temperature of the hot water is from 80°C to boiling.

4. A process according to claim 1 wherein the duration of the mixing of the hot water with the starch is from 2 to 30 minutes.

5. A process according to claim 1 wherein, after extrusion, the noodle is portioned and formed into a nest or cake.

6. A process according to claim 1 wherein the steaming of the noodles is carried out for a period of from 30 seconds to 25 minutes.

7. A process according to claim 1 wherein blanching of the steamed noodles is carried out to complete or substantially complete the starch gelatinisation.

8. A process according to claim 1 wherein blanching of the steamed noodles is carried out in water at a temperature from 80°C to boiling for a period of from 1 to 60 seconds.

9. A process according to claim 1 wherein chilling of the blanched noodles is carried out in water at a temperature from 1° to 12°C for a period of from 10 seconds to 5 minutes.

10. A process according to claim 1 wherein the noodles are dried at a temperature from 50° to 100°C for a period of from 5 minutes to 5 hours.

## Patentansprüche

1. Verfahren zur Herstellung von Instant-Glasnudeln, welches umfasst
a) Herstellen eines Teigs aus roher Mungbohnenstärke oder roher Kartoffelstärke oder jedem Gemisch davon durch Zugeben von heißem Was er und Vermischen, um die Stärke teilweise vorzugelatinisieren,
b) Extrudieren des Teigs, um Nudeln zu bilden,
c) Bedampfen der Nudeln,
d) Blanchieren der bedampften Nudeln mit heißem Wasser,
e) Kühlen der blanchierten Nudeln in kaltem Wasser, um eine Stärke-Retrogadation zu ermöglichen, und
f) Trocknen der Nudeln auf einen Feuchtigkeitsgehalt von unter 5 %.

2. Verfahren nach Anspruch 1, wobei die Menge an zu der Stärke zugesetztem heissem Wasser von 20 bis 60 Gewichtsprozent liegt, bezogen auf das Gesamtgewicht des gebildeten Teigs

3. Verfahren nach Anspruch 1, wobei die Temperatur des heissen Wassers von 80 °C bis zum Siedepunkt liegt.

4. Verfahren nach Anspruch 1, wobei die Dauer des Mischvorgangs des heissen Wassers mit der Stärke von 2 bis 30 Minuten liegt.

5. Verfahren nach Anspruch 1, wobei nach der Extrusion die Nudel portioniert und zu einem Nest oder einem Kuchen geformt wird.

6. Verfahren nach Anspruch 1, wobei das Bedampfen der Nudeln für ine Zeitspanne von 30 Sekunden bis 25 Minuten durchgeführt wird.

7. Verfahren nach Anspruch 1, wobei das Blanchieren der bedampften udeln durchgeführt wird, um die Stärke-Gelatinisierung zu vervollständigen oder in Wesentlichen zu vervollständigen.

8. Verfahren nach Anspruch 1, wobei das Blanchieren der bedampften Nudeln in Wasser bei einer Temperatur von 80 °C bis zum Siedepunkt für eine Zeits anne von 1 bis 60 Sekunden durchgeführt wird.

9. Verfahren nach Anspruch 1, wobei das Kühlen der blanchierten Nudeln in Wasser bei einer Temperatur von 1 °C bis 12 °C für eine Zeitspanne von 10 Sekunden bis 5 Minuten durchgeführt wird.

10. Verfahren nach Anspruch 1, wobei die Nudeln bei einer Temperatur von 50 °C bis 100 °C für eine Zeitspanne von 5 Minuten bis 5 Stunden getrocknet werden.

## Revendications

1. Procédé pour la préparation de nouilles de verre instantanées qui comprend les phases consistant à :
a) préparer une pâte à partir d'amidon cru de haricot mung ou d'amidon cru de pomme de terre, ou d'un mélange de ceux-ci, en ajoutant de l'eau chaude et en mélangeant pour prégélifier partiellement l'amidon,
b) extruder la pâte pour former les nouilles,
c) cuire les nouilles à la vapeur,
d) blanchir les nouilles cuites à la vapeur avec de l'eau chaude,
e) refroidir les nouilles blanchies dans de l'eau froide pour permettre une rétrogradation de l'amidon, et
f) faire sécher les nouilles jusqu'à une teneur en eau inférieure à 15 %.

2. Procédé selon la revendication 1, dans lequel la quantité d'eau chaude ajoutée à l'amidon est comprise entre 20 et 60 % en poids sur la base du poids total de la pâte formée.

3. Procédé selon la revendication 1, dans lequel la température de l'eau chaude va de 80°C à l'ébullition.

4. Procédé selon la revendication 1, dans lequel la durée du mélange de l'eau chaude avec l'amidon est de 2 à 30 minutes.

5. Procédé selon la revendication 1, dans lequel, après extrusion, les nouilles sont divisées en portions et façonnées en un nid ou un pain.

6. Procédé selon la revendication 1, dans lequel la cuisson à la vapeur des nouilles est effectuée pendant une durée comprise entre 30 secondes et 25 minutes.

7. Procédé selon la revendication 1, dans lequel le blanchiment des nouilles cuites à la vapeur est effectué pour rendre complète ou sensiblement complète la gélification de l'amidon.

8. Procédé selon la revendication 1, dans lequel le blanchiment des nouilles cuites à la vapeur est effectué dans de l'eau à une température de 80°C à l'ébullition pendant une durée comprise entre 1 et 60 secondes.

9. Procédé selon la revendication 1, dans lequel le refroidissement des nouilles blanchies est effectué dans de l'eau à une température de 1° à 12°C pendant une durée comprise entre 10 secondes et 5 minutes.

10. Procédé selon la revendication 1, dans lequel les nouilles sont séchées à une température de 50° à 100°C pendant une durée comprise entre 5 minutes et 5 heures.
